# FASCICULE DE BREVET EUROPEEN

(11) **EP 0 644 528 B1**
(45) Date de publication et mention de la délivrance du brevet: **27.01.1999**
(21) Numéro de dépôt: 94401955.3
(22) Date de dépôt: 02.09.1994
(51) Int. Cl.: G11B 5/39

(54) **Tête magnétique de lecture et d'écriture à élément magnétorésistant compensé en écriture**
Aufzeichnungs- und Wiedergabemagnetkopf mit bezüglich Aufzeichnung kompensiertem Magnetowiderstandselement
Recording and reproducing magnetic head with magnetoresistant element compensated with respect to recording

(30) Priorité: 06.09.1993 FR 9310560
(43) Date de publication de la demande: 22.03.1995
(73) Titulaire: COMMISSARIAT A L'ENERGIE ATOMIQUE, 75015 Paris (FR); SILMAG S.A., 38054 Grenoble Cédex 9 (FR)
(72) Inventeur: Lazzari, Jean-Pierre, F-38700 Corenc (FR)
(74) Mandataire: Signore, Robert

(56) Documents cités:
- EP-A- 0 475 397
- WO-A-88/07741
- US-A- 2 975 241
- US-A- 3 670 114
- PATENT ABSTRACTS OF JAPAN vol. 3, no. 36 (E-100) 27 Mars 1979 & JP-A-54 014 719 (MITSUBISHI DENKI K. K.) 3 Février 1979
- PATENT ABSTRACTS OF JAPAN vol. 17, no. 366 (P-1571) 9 Juillet 1993 & JP-A-50 054 341 (SONY CORP) 5 Mars 1993

## Description

### Domaine technique

La présente invention a pour objet une tête magnétique de lecture et d'écriture à élément magnétorésistant compensé en écriture. Elle trouve une application dans l'enregistrement magnétique d'informations.

### Etat de la technique

On connaît des têtes magnétique de lecture et d'écriture utilisant, comme moyen de lecture, un élément magnétorésistant. Dans les premiers dispositifs de ce genre, l'élément magnétorésistant était placé dans l'entrefer même du circuit magnétique de la tête.

Si de telles têtes sont simples et de coût réduit, elles présentent en revanche des inconvénients. En effet, le champ d'écriture engendre dans l'élément magnétorésistant un champ très important qui sature cet élément dans la direction du champ. Si l'on veut ensuite utiliser la tête en lecture, il faut attendre que les domaines magnétiques de la couche magnétorésistante soient revenus exactement dans l'orientation initiale appropriée à la lecture, c'est-à-dire en général à 45° de l'axe de l'élément.

Or, il arrive que certains domaines, trop profondément perturbés par le champ d'écriture, ne reviennent jamais à cette position idéale. Il en résulte des bruits parasites qui viennent perturber le signal de lecture.

Une solution à ce problème consiste à utiliser deux têtes, une pour l'écriture, l'autre pour la lecture, cette dernière seule étant pourvue d'un élément magnétorésistant. Cet élément n'est donc jamais soumis à des champs importants et présente donc une structure en domaines extrêmement stable.

Cependant, cette technologie est complexe et chère. De plus, la présence de deux entrefers séparés complique le problème de positionnement de la tête le long des pistes d'enregistrement, surtout lorsque le support d'enregistrement est un disque et que les pistes sont courbes.

Pour ces raisons, l'invention ne retient pas cette solution et revient aux têtes à un seul entrefer mais dans une structure particulière dite horizontale à couches minces. De telles têtes sont connues et décrites dans le document FR-A-2 645 314 (ou dans son correspondant américain US-A-5,208,716). Une tête de ce genre est décrite sur la figure 1 annexée.

Sur cette figure, on voit, en coupe, une tête horizontale comprenant un substrat semiconducteur 10, par exemple en silicium, dans lequel a été gravé un caisson 12. Dans ce caisson, une couche magnétique inférieure 14 a été formée électrolytiquement et a été prolongée par deux piliers verticaux 16₁, 16₂. Un bobinage conducteur 18 entoure les piliers. Ce bobinage est noyé dans une couche isolante 20. Le circuit magnétique se complète par une pièce polaire supérieure séparée en deux parties 22₁, 22₂ par un espaceur amagnétique 24. Un élément magnétorésistant MR, par exemple en fer-nickel, est disposé sous l'espaceur amagnétique 24. Cet élément peut être obtenu par photogravure, en prenant l'espaceur comme masque. Il est donc autoaligné par rapport à l'espaceur. La tête se déplace devant un support magnétique 30 où sont enregistrées les informations à lire ou à écrire.

Le fonctionnement d'une telle tête est schématiquement le suivant.

A l'écriture, le courant circulant dans le bobinage 18 crée un champ magnétique et, par conséquent, une induction dans le circuit magnétique. Les lignes de champ qui s'épanouissent autour de l'espaceur induisent une aimantation dans le support 30.

A la lecture, une information magnétique enregistrée dans le support 30 produit un champ magnétique de lecture et, par conséquent, une induction dans le circuit magnétique. Cette induction se referme, en partie, à travers l'élément magnétorésistant MR. Il en résulte une aimantation dans cet élément, qui va provoquer une variation de sa résistance. En faisant circuler un courant dans cet élément, on pourra mesurer sa variation de résistance et, en conséquence, retrouver l'information lue.

Bien que donnant satisfaction à certains égards, de telles têtes présentent un inconvénient, encore lié à la perturbation apportée à l'élément magnétorésistant lors de l'écriture, en raison du champ de fuite qui passe par cet élément. Bien qu'atténué par rapport aux têtes où l'élément magnétorésistant était disposé dans l'entrefer même, ce phénomène perturbateur demeure. C'est ce que l'invention propose de réduire, voire d'annuler.

### Exposé de l'invention

A cette fin, le principe de l'invention consiste à placer sous et à proximité de l'élément magnétorésistant, un élément conducteur parcouru par le courant d'écriture. Ce courant va créer autour de lui un champ magnétique additionnel qui va traverser l'élément magnétorésistant. Si le sens de connexion est correct, ce champ additionnel va s'opposer au champ de fuite d'écriture. Ce champ additionnel agira donc comme un champ compensateur et réduira, voire annulera le champ magnétique global dans l'élément magnétorésistant en phase d'écriture.

De façon précise, la présente invention a donc pour objet une tête magnétique de lecture et d'écriture comprenant un circuit magnétique avec un entrefer, un élément magnétorésistant situé sous l'entrefer et un bobinage conducteur entourant une partie du circuit magnétique, ce bobinage étant parcouru par un courant électrique lors d'une phase d'écriture, ledit courant créant un champ magnétique d'écriture dans le circuit magnétique, une partie de ce champ d'écriture, dit champ de fuite, traversant l'élément magnétorésistant, cette tête étant caractérisée par le fait qu'elle comprend en outre un élément conducteur électrique placé sous l'élément magnétorésistant et relié en série avec le bobinage conducteur dans un sens tel que, en écriture, le courant circulant dans cet élément conducteur produise dans l'élément magnétorésistant un champ magnétique de sens opposé au champ de fuite traversant l'élément magnétorésistant.

Dans un mode de réalisation avantageux, la tête de l'invention comprend une couche magnétique additionnelle reliée au circuit magnétique et présentant une ouverture située entre l'élément magnétorésistant et l'élément conducteur électrique.

Cette couche additionnelle permet d'optimiser le rendement de la tête à la lecture.

Dans un mode de réalisation avantageux, l'ouverture de la couche magnétique mince présente une largeur sensiblement égale ou inférieure à la largeur de l'élément magnétorésistant.

### Brève description des dessins

- la figure 1, déjà décrite, montre une tête magnétique à élément magnétorésistant selon l'art antérieur ;
- la figure 2 montre, en coupe, une tête magnétique conforme à l'invention ;
- la figure 3 illustre la connexion électrique entre l'élément conducteur placé sous l'élément magnétorésistant et le bobinage conducteur ;
- la figure 4 montre schématiquement les lignes de champ magnétique en écriture ;
- la figure 5 montre schématiquement les lignes de champ magnétique en lecture ;
- la figure 6 montre un premier sous-ensemble selon un premier plan de coupe passant par le centre du bobinage ;
- la figure 7 montre un deuxième sous-ensemble selon un second plan de coupe passant par l'un des plots de connexion de l'élément conducteur ;
- la figure 8 montre, en coupe, un troisième sous-ensemble complété par l'élément conducteur relié au bobinage ;
- la figure 9 montre, en coupe, un quatrième sous-ensemble complété par la couche magnétique additionnelle ;
- la figure 10 montre, en coupe, un cinquième sous-ensemble comprenant l'élément magnétorésistant.

### Exposé détaillé de modes de réalisation

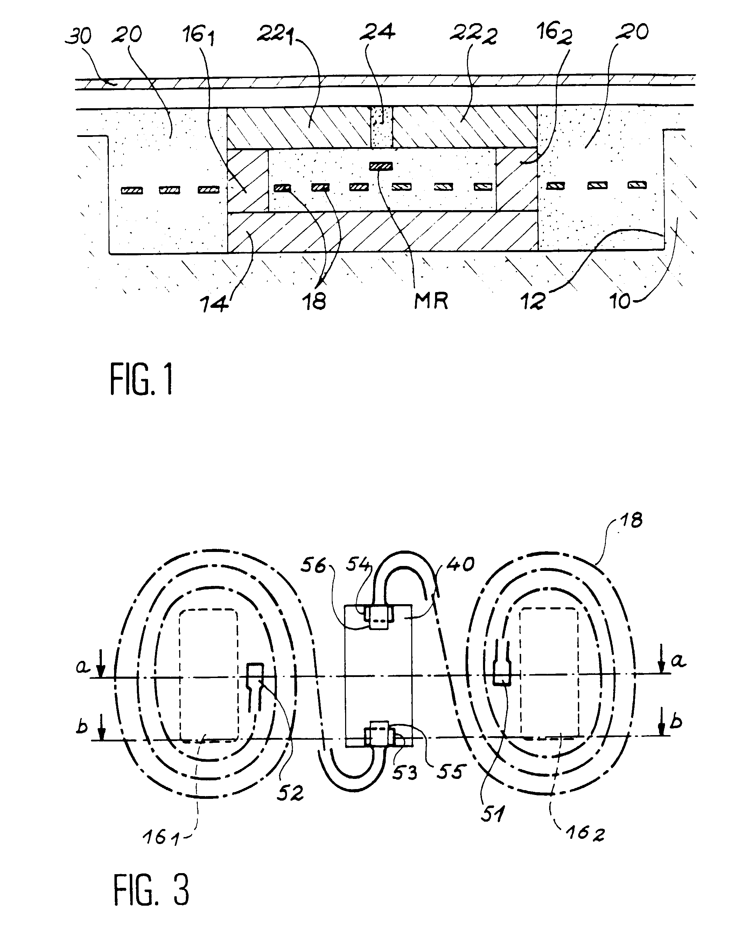

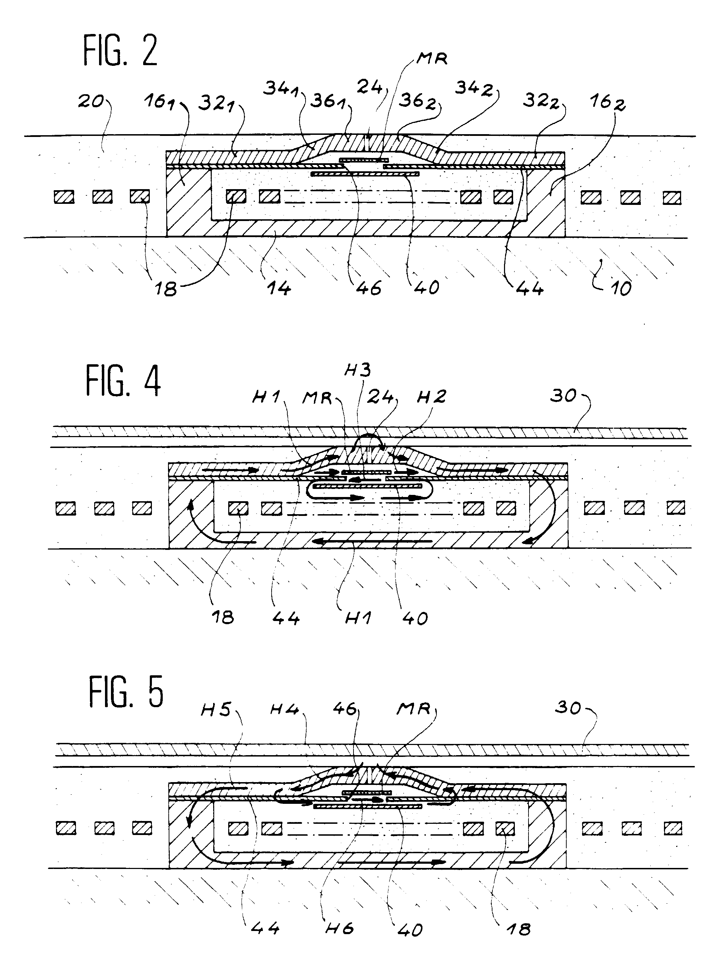

On voit, sur la figure 2, une tête magnétique de lecture et d'écriture conforme à la présente invention. Les éléments déjà représentés sur la figure 1 portent les mêmes références. La tête représentée comprend en outre un élément conducteur 40, par exemple en cuivre, relié au bobinage 18 (comme on le verra mieux sur la figure 3) et une couche magnétique additionnelle 44 avec une ouverture ou entrefer 46. La largeur de cette ouverture est sensiblement égale ou inférieure à celle de l'élément magnétorésistant MR, mais la largeur de l'élément conducteur 40 est supérieure à celle dudit élément magnétorésistant. La couche magnétique 44 peut avoir une épaisseur comprise entre environ 0,1 µm et environ 5 µm. L'élément conducteur 40 peut être écarté de la couche magnétique 44 d'une distance comprise entre environ 0,1 et 1 µm.

On observera, par ailleurs, que la couche magnétique supérieure du circuit magnétique est composée de trois doubles parties, l'une 32₁, 32₂, horizontale et en contact avec la couche additionnelle 44, une autre 34₁, 34₂, légèrement inclinée et dégageant la couche additionnelle 44 autour de son ouverture 46, et une troisième, à nouveau horizontale, 36₁, 36₂, de chaque côté de l'espaceur 24. Naturellement, il ne s'agit là que d'un mode de réalisation ne limitant en rien la portée de l'invention.

Sur la figure 3, on voit, en vue de dessus, un bobinage conducteur 18 en forme de double spirale, entourant les deux piliers magnétiques 16₁, 16₂. Deux plots conducteurs 51, 52 permettent de relier l'enroulement à tout moyen d'alimentation. Le bobinage 18 se termine à deux extrémités 53, 54, situées dans le plan médian de la tête. Ces deux extrémités aboutissent à deux plots de connexion 55, 56 qui permettent de connecter l'élément conducteur 40. Le courant d'écriture parcourant l'enroulement 18 passe donc intégralement dans l'élément conducteur 40. Le sens de connexion de celui-ci peut être qualifié de "en opposition", dans la mesure où le sens du courant dans l'élément 40 est tel que le champ magnétique additionnel qui en résulte au-dessus de l'élément est de sens opposé au champ magnétique canalisé par le circuit magnétique et résultant de la circulation du courant dans le bobinage 18. C'est à cette condition, en effet, que ce champ magnétique additionnel pourra compenser le champ de fuite à l'écriture.

Les figures 4 et 5 permettent de mieux comprendre le fonctionnement de la tête de l'invention.

La figure 4, tout d'abord, correspond à un fonctionnement en écriture. On y voit le champ d'écriture H1 canalisé par le circuit magnétique, avec une partie H2 constituant un champ de fuite, canalisé par la couche additionnelle 44 et enjambant l'ouverture 46 servant d'entrefer. Le champ H3 qui résulte de la circulation du courant dans l'élément 40 (perpendiculairement au plan de la figure) est opposé à H2. La résultante est nulle si la tête est bien dimensionnée, ou, en tout état de cause, plus faible que le champ H2.

La figure 5 illustre le fonctionnment de la tête en lecture. Le champ H4 est créé par l'information à lire. Il se referme en partie selon le champ H5 par le circuit magnétique et en partie par le champ H6, canalisé par la couche magnétique additionnelle 44. Grâce à l'ouverture 46, agissant comme entrefer, ce champ H6 passe dans l'élément magnétorésistant MR et permet d'accéder à l'information lue.

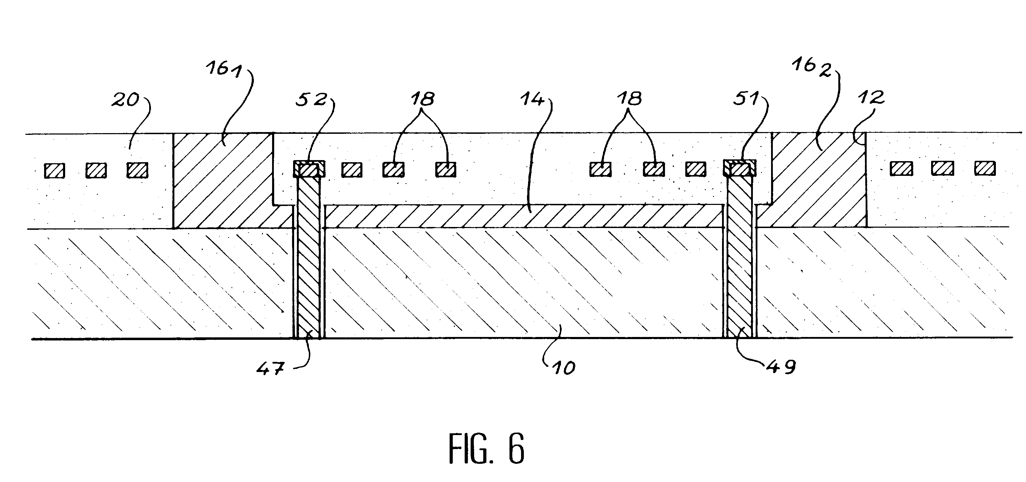

Les figures 6 à 10 illustrent différentes étapes d'un procédé de réalisation de la tête qui vient d'être décrite. Nombre d'opérations sont déjà décrites dans le document FR-A-2 645 314 déjà cité (ou son correspondant américain US-A-5,208,716) et elles ne seront donc pas reprises ici. Seules les opérations spécifiques à la réalisation de l'élément conducteur et de la couche magnétique additionnelle seront décrites.

Comme illustré sur la figure 6, on commence par réaliser, sur un substrat semiconducteur 10, par exemple en silicium, un caisson 12, une couche magnétique inférieure 14 et deux piliers magnétiques 16₁, 16₂ comme décrit dans le document FR-A-2 645 314 déjà cité. Puis on réalise deux intraconnexions 47, 49 à travers le substrat 10 et la couche magnétique inférieure, et deux plots de connexion 51 et 52 dont on a vu la disposition sur la figure 3 précédente. La figure 6 correspond donc à une coupe selon la ligne aa de la figure 3, c'est-à-dire une coupe passant par les plots 51, 52.

On réalise ensuite le bobinage conducteur 18 partant de ces plots 51 et 52 et s'enroulant autour des piliers 16₁, 16₂. Ce bobinage peut être en cuivre. Seuls quelques tours sont illustrés sur la figure 6 (en liaison avec la figure 3) mais il faut comprendre que, dans la pratique, on peut avoir, par exemple, 16 tours dans un même plan, répartis en deux fois 8 tours.

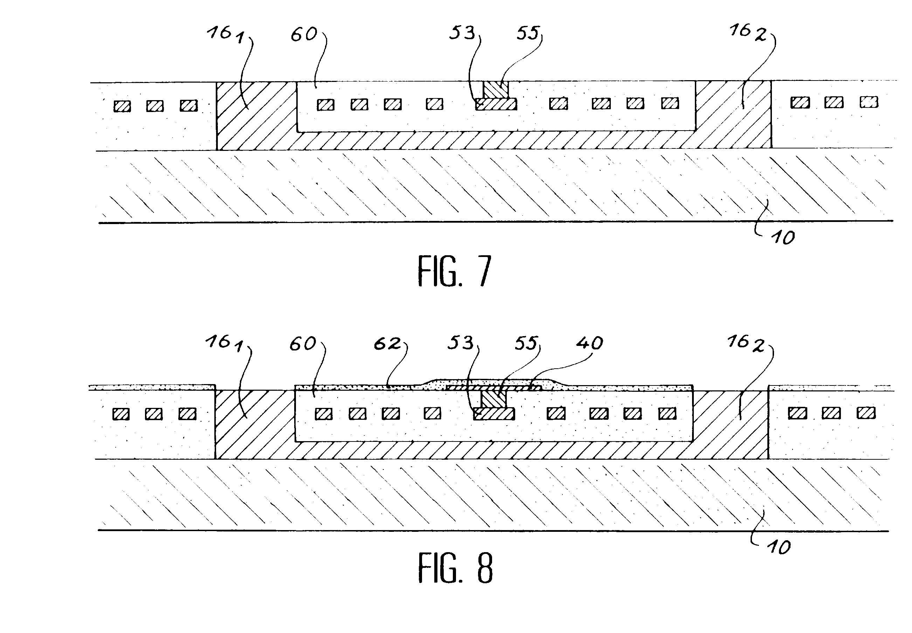

Ce bobinage se termine par deux extrémités 53, 54 disposées dans le plan médian de la tête, comme on l'a vu à propos de la figure 3. La figure 7 correspond à une coupe le long de la ligne bb de la figure 3, c'est-à-dire une coupe passant par l'extrémité 53 du bobinage.

On dépose sur le bobinage 18 une couche isolante 60. Il peut s'agir de silice (SiO₂), de 2 µm environ. On réalise ensuite une photolithographie suivie d'une gravure ionique réactive pour graver cette couche à l'aplomb des extrémités 53, 54 du bobinage. Dans les deux ouvertures ainsi pratiquées, on fait croître, par exemple par électrolyse, des plots de connexion 55, 56 (seul le plot 55 apparaît sur la coupe de la figure 7). Ces plots peuvent être en cuivre par exemple.

On planarise ensuite le dépôt de cuivre afin que les deux plots de connexion affleurent à la surface de la couche isolante 60.

On dépose ensuite, par exemple par pulvérisation cathodique, une couche mince conductrice, par exemple en cuivre. On effectue une photolithographie suivie d'une gravure pour ne laisser subsister qu'une plaquette formant l'élément conducteur 40. Cet élément repose, à ses deux extrémités, sur les plots 55, 56. La figure 8 montre cet élément conducteur, en coupe, à son extrémité reposant sur le plot 55.

La largeur de l'élément conducteur 40 peut aller d'environ 1 à 15 µm. Sa longueur peut aller d'environ 3 à 15 µm.

Sur l'ensemble, on dépose ensuite une couche mince isolante 62, par exemple en silice (SiO₂). On peut opérer par pulvérisation cathodique. L'épaisseur de cette couche peut aller d'environ 0,05 µm à 3 µm. Cette couche recouvre l'élément conducteur 40.

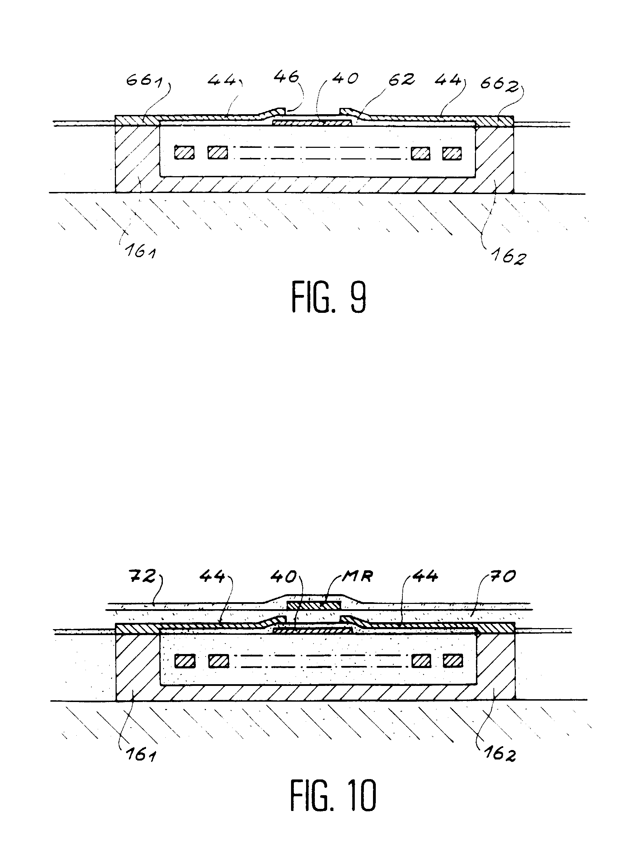

Par photolithographie suivie de gravure ionique réactive, on forme dans cette couche 62 deux ouvertures 66₁, 66₂, au-dessus des deux piliers magnétiques 16₁, 16₂, de chaque côté de la tête, pour dégager ces derniers (fig. 9).

On dépose ensuite une couche magnétique 44, par exemple en fer-nickel. On peut opérer par exemple par pulvérisation cathodique. L'épaisseur de cette couche peut être comprise entre environ 0,1 et 5 µm.

Par photolithographie suivie de gravure, on réalise une ouverture 46 au centre de la couche magnétique 44. La largeur de cette ouverture est du même ordre que ou inférieure à celle du futur élément magnétorésistant. Elle peut être comprise entre environ 1 et 6 µm.

On dépose ensuite sur l'ensemble une couche isolante 70 (figure 10), par exemple en silice (SiO₂). Son épaisseur est comprise entre environ 0,1 et 1 µm. Puis on dépose,selon tout procédé connu, l'élément magnétorésistant MR.

On dépose une couche isolante 72 sur cet élément magnétorésistant pour l'isoler électriquement. On réalise ensuite deux intraconnexions à travers le substrat 10, pour obtenir deux plots de sortie permettant la mesure de la tension de lecture. L'adjonction, selon l'invention, de l'élément conducteur 40 et de la couche magnétique 44 n'ajoute donc pas de plots de connexion supplémentaires par rapport à une tête qui serait conforme au document FR-A-2 645 314 déjà cité. Il y a toujours quatre plots (voire même trois si deux plots sont mis en commun).

Ayant isolé l'élément magnétorésistant MR et réalisé les intraconnexions, on grave les couches isolantes 70, 72 au-dessus des piliers magnétiques et on dépose ensuite les couches magnétiques 32₁, 32₂, et 34₁, 34₂ déjà représentées sur la figure 2. On forme ensuite l'espaceur 24 par des moyens déjà décrits dans l'art antérieur et notamment dans le document FR-A-2 645 314 déjà cité, et enfin les pièces polaires 36₁, 36₂.

## Revendications

1. Tête magnétique de lecture et d'écriture comprenant un circuit magnétique (14, 16₁, 16₂, 22₁, 22₂) avec un entrefer (24), un élément magnétorésistant (MR) situé sous l'entrefer (24) et un bobinage conducteur (18) entourant une partie (16₁, 16₂) du circuit magnétique, ce bobinage étant parcouru par un courant électrique lors d'une phase d'écriture, ledit courant créant un champ magnétique d'écriture (H1) dans le circuit magnétique, une partie (H2) de ce champ d'écriture, dit champ de fuite, traversant l'élément magnétorésistant (MR), cette tête étant caractérisée par le fait qu'elle comprend en outre un élément conducteur électrique (40) placé sous l'élément magnétorésistant (MR) et relié en série avec le bobinage conducteur (18) dans un sens tel que, en écriture, le courant circulant dans cet élément conducteur (40) produise, dans l'élément magnétorésistant (MR), un champ magnétique (H3) de sens opposé au champ de fuite (H2) traversant l'élément magnétorésistant (MR).

2. Tête magnétique selon la revendication 1, caractérisée par le fait que l'élément conducteur électrique (40) est plus large que l'élément magnétorésistant (MR).

3. Tête magnétique selon la revendication 1, caractérisée par le fait qu'elle comprend une couche magnétique additionnelle (44) reliée au circuit magnétique (16₁, 16₂) et présentant une ouverture (46) située entre l'élément magnétorésistant (MR) et l'élément conducteur électrique (40).

4. Tête magnétique selon la revendication 3, caractérisée par le fait que la couche magnétique additionnelle (44) présente une épaisseur comprise entre environ 0,1 et environ 5 µm.

5. Tête magnétique selon la revendication 3, caractérisée par le fait que l'ouverture (46) de la couche magnétique additionnelle (44) présente une largeur sensiblement égale ou inférieure à la largeur de l'élément magnétorésistant (MR).

## Patentansprüche

1. Aufzeichnungs- und Wiedergabemagnetkopf, einen Magnetkreis (14, 16₁, 16₂, 22₁, 22₂) mit einem Spalt (24), ein unter dem Spalt (24) befindliches magnetoresistentes Element (MR) und eine einen Teil (16₁, 16₂) des Magnetkreises umgebende leitende Spule (18) umfassend, wobei diese Spule während einer Aufzeichnungsphase von einem elektrischen Strom durchflossen wird, dieser Strom in dem Magnetkreis ein Aufzeichnungsmagnetfeld (H1) erzeugt und dabei ein Teil (H2) dieses Aufzeichnungsfelds, Streufeld genannt, das magnetoresistente Element (MR) durchquert,
**dadurch gekennzeichnet,**
daß er außerdem ein elektrisch leitendes Element (40) umfaßt, unter dem magnetoresistenten Element (MR) befindlich und mit der leitenden Spule (18) in einer solchen Richtung in Serie verbunden, daß beim Aufzeichnen der in diesem leitenden Element (40) fließende Strom in dem magnetoresistiven Element (MR) ein Magnetfeld (H3) mit einer bezüglich dem das magnetoresistive Element (MR) durchquerenden Streufeld (H2) entgegengesetzten Richtung erzeugt.

2. Magnetkopf nach Anspruch 1, dadurch gekennzeichnet, daß das elektrisch leitende Element (40) breiter ist als das magnetorsistive Element (MR).

3. Magnetkopf nach Anspruch 1, dadurch gekennzeichnet, daß er eine zusätzliche magnetische Schicht (44) umfaßt, verbunden mit dem Magnetkreis (16₁, 16₂) und mit einer Öffnung (46), die sich zwischen dem magnetosresistiven Element (MR) und dem elektrisch leitenden Element (40) befindet.

4. Magnetkopf nach Anspruch 3, dadurch gekennzeichnet, daß die zusätzliche magnetische Schicht (44) eine Dicke zwischen ungefähr 0,1 und ungefähr 5 µm aufweist.

5. Magnetkopf nach Anspruch 3, dadurch gekennzeichnet, daß die Öffnung (46) der zusätzlichen magnetischen Schicht (44) eine Breite im wesentlichen gleich oder kleiner als die Breite des magnetoresistiven Elements (MR) aufweist.

## Claims

1. Magnetic read/write head having a magnetic circuit (14, 16₁, 16₂, 22₁, 22₂) with a head gap (24), a magnetoresistant element (MR) located beneath the head gap (24) and a conductor coil (18) surrounding part (16₁,16₂) of the magnetic circuit, said coil being traversed by an electric current during a writing phase, said current creating a writing magnetic field (H1) in the magnetic circuit, part (H2) of said writing field, known as the leakage field, traversing the magnetoresistant element (MR), said head being characterized in that it also comprises an electrical conductor element (40) placed beneath the magnetoresistant element (MR) and connected in series with the conductor coil (18) in a direction such that, in writing, the current flowing in said conductor element (40) produces in the magnetoresistant element (MR) a magnetic field (H3) in the opposite direction to the leakage field (H2) passing through the magnetoresistant element (MR).

2. Magnetic head according to claim 1, characterized in that the electrical conductor element (40) is wider than the magnetoresistant element (MR).

3. Magnetic head according to claim 1, characterized in that it comprises an additional magnetic layer (44) connected to the magnetic circuit (16₁,16₂) and having an opening (46) between the magnetoresistant element (MR) and the electrical conductor element (40).

4. Magnetic head according to claim 3, characterized in that the additional magnetic layer (44) has a thickness between approximately 0.1 and approximately 5 µm.

5. Magnetic head according to claim 3, characterized in that the opening (46) of the additional magnetic layer (44) has a width substantially equal to or smaller than the width of the magnetoresistant element (MR).
